(19) **Europäisches Patentamt European Patent Office Office européen des brevets**

(11) **EP 1 312 950 B1**

(12) **FASCICULE DE BREVET EUROPEEN**

(45) Date de publication et mention
de la délivrance du brevet:
**20.08.2008 Bulletin 2008/34**

(51) Int Cl.:
**G02B 6/02** *(2006.01)* **H04B 10/18** *(2006.01)*

(21) Numéro de dépôt: **02292640.6**

(22) Date de dépôt: **24.10.2002**

(54) **Fibre de compensation de dispersion chromatique pour système de transmission à fibre optique en bande u**

Dispersionskompensationsfaser für faseroptisches Übertragungssystem im U-Band

Chromatic dispersion compensating fibre for fibre optic transmission system in U band

(84) Etats contractants désignés:
**AT BE BG CH CY CZ DE DK EE ES FI FR GB GR IE IT LI LU MC NL PT SE SK TR**

(30) Priorité: **15.11.2001 FR 0114790**

(43) Date de publication de la demande:
**21.05.2003 Bulletin 2003/21**

(73) Titulaire: **Draka Comteq B.V.**
**1083 HJ Amsterdam (NL)**

(72) Inventeurs:
- **Gorlier, Maxime**
**75017 Paris (FR)**
- **de Montmorillon, Louis-Anne**
**75017 Paris (FR)**
- **Sillard, Pierre**
**78150 Le Chesnay (FR)**
- **Fleury, Ludovic**
**78390 Bois d'Arcy (FR)**
- **Beaumont, Florent**
**78700 Conflans Ste Honorine (FR)**
- **Nouchi, Pascale**
**78600 Maisons-Lafitte (FR)**

(74) Mandataire: **Blokland, Arie**
**Algemeen Octrooi- en Merkenbureau,**
**P.O. Box 645**
**5600 AP Eindhoven (NL)**

(56) Documents cités:
EP-A- 1 081 514         DE-A- 19 839 870
US-A- 5 361 319         US-B1- 6 263 138

- **BERTAINA A ET AL: "Line fibers for new transmission windows" 14TH ANNUAL MEETING OF THE IEEE LASERS AND ELECTRO-OPTICS SOCIETY;SAN DIEGO, CA, UNITED STATES NOV 11-15 2001, vol. 2, 2001, pages 473-474, XP002203600 Conf Proc Laser Electr Optic Soc Annu Meet CLEO;Conference Proceedings - Lasers and Electro-Optics Society Annual Meeting-LEOS 2001**
- **BIGO S ET AL: "1.5 TERABIT/S WDM TRANSMISSION OF 150 CHANNELS AT 10GBIT/S OVER 4X100KM OF TERALIGHT FIBRE" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS: SEE, FR, vol. I OF II, 26 septembre 1999 (1999-09-26), pages 40-41, XP002946214 ISBN: 2-912328-12-8**

**Description**

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40Gbit/s ou à 160Gbit/s ;l'objectif est d'obtenir, pour toutes les valeurs de longueur d'onde du multiplex, une dispersion chromatique cumulée sensiblement nulle sur la liaison, de sorte à limiter l'élargissement des impulsions; on appelle °dispersion chromatique cumulée" l'intégrale de la dispersion chromatique sur la longueur de la fibre; à dispersion chromatique constante, la dispersion chromatique cumulée est égale au produit de la dispersion chromatique par la longueur de la fibre. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber"), des fibres à dispersion décalée, appelées aussi fibres NZ-DSF+ (acronyme de l'anglais "Non-Zero Dispersion shifted Fiber"). On qualifie de NZ-DSF+ des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1 ps/(nm$^2$.km).

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Des fibres DCF sont décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre de ligne. US-A-5 568 583 ou US-A-5 361 319 proposent une fibre DCF pour la compensation de la dispersion chromatique d'une fibre SMF, d'une dispersion de l'ordre de 17 ps/(nm.km) à 1550 nm. FR-A-99 08 298 ou encore FR-A-01 06 246 décrivent des fibres de compensation de dispersion adaptées à compenser la dispersion chromatique et la pente de dispersion chromatique d'une fibre DSF. Les fibres de compensation de dispersion présente en générale un coût supérieur à la fibre de ligne, et une atténuation importante.

Un des problèmes rencontrés dans les systèmes de transmission est celui de la compensation de la dispersion chromatique sur toute la largeur de la bande; dans ce contexte, on définit généralement arbitrairement plusieurs bandes dans le domaine de longueurs d'ondes utilisable pour la transmission par fibres optiques : la bande C s'étend entre 1530 et 1565 nm, la bande L s'étend au dessus de la bande C, jusqu'à des longueurs d'onde de l'ordre de 1620 ou 1625 nm. La bande XL ou U s'étend au-dessus de la bande L, pour des longueurs d'onde comprises entre 1625 et 1675 nm.

Les fibres de compensation de dispersion chromatique proposées dons l'état de la technique sont généralement difficilement utilisables pour la compensation de la dispersion chromatique et de la pente de dispersion chromatique dans la bande U. Elles sont en effet le plus souvent optimisées pour un point de fonctionnement autour de 1550 nm; de ce fait, à une longueur d'onde de 1650 nm, elles ne compensent pas bien la dispersion chromatique et la pente de dispersion chromatique ou présentent de mauvaises pertes par courbure dans la bande U.

US 6 263 138 propose une fibre optique pour la compensation de la dispersion chromatique d'une fibre optique à dispersion chromatique positive. La fibre optique présente pour une longueur d'onde de 1550 nm une dispersion chromatique inférieure à -40 ps/(nm.km), un rapport entre la dispersion chromatique et la pente de dispersion chromatique entre 50 nm et 230 nm, une aire effective supérieure à 12 $\mu$m$^2$, et des pertes par courbure inférieures ou égales à 0,05 dB. Cette fibre optique permet de compenser en ligne la dispersion chromatique cumulée dans une fibre optique de ligne à dispersion chromatique positive.

EP 1 081 514 propose une fibre optique pour la compensation en ligne de la dispersion chromatique d'un fibre optique à dispersion chromatique positive. La fibre optique présente pour une longueur d'onde de 1550 nm une dispersion chromatique négative et supérieure à -40 ps/(nm.km), une pente de dispersion chromatique négative, un rapport entre la dispersion chromatique et la pente de dispersion chromatique entre 50 nm et 230 nm, une aire effective supérieure à 10 $\mu$m$^2$, des pertes par courbures inférieures ou égales à 0,05 dB, et une longueur d'onde de coupure supérieure ou égale à 110 nm. La fibre optique permet de compenser en ligne la dispersion chromatique cumulée dans une fibre optique de ligne du type NV-DSF à dispersion chromatique positive.

US 5 361 319 propose une fibre optique pour la compensation de la dispersion chromatique présentant, pour les longueurs d'onde entre 1520 nm et 1565 nm, une dispersion chromatique négative inférieure à -20 ps/(nm.km), une pente de la dispersion chromatique négative et une atténuation inférieure à 1 dB/km pour la compensation de la dispersion chromatique positive cumulée dans une fibre optique monomode à transmission à zéro dispersion chromatique pour les longueurs d'onde entre 1290 nm et 1330 nm

L'invention propose une fibre optique adaptée à la compensation de la dispersion chromatique et de pente de dispersion chromatique dans des systèmes à transmission par fibre optique pour de débits supérieurs ou égaux à 40 Gbits/s ou à 160 Gbits/s dans la bande U pour des longueurs d'onde entre 1625 nm et 1675 nm.

Plus précisément, l'invention propose une fibre optique, comportant, successivement du centre de la fibre vers la périphérie un profile d'indice en trapèze ou rectangle avec une tranchée enterrée et un anneau puis une gaine d'indice constant, la différence ($\Delta n_1$) entre l'indice maximum du trapèze ou du rectangle et l'indice de la gaine étant comprise entre 16.10$^{-3}$ et 30,10$^{-3}$ et le rayon extérieur ($r_1$) de la partie centrale de la fibre optique présentant un indice supérieur à l'indice de la gaine étant compris entre 1,3 et 2,1 $\mu$m, la différence ($\Delta n_2$) entre l'indice de la tranchée enterrée et l'indice de la gaine étant comprise entre - 9.10$^{-3}$ et - 4,5.10$^{-3}$ et le rayon extérieur ($r_2$) de la tranchée enterrée étant compris entre 3,4 et 6,2 $\mu$m, la différence ($\Delta n_3$) entre l'indice de l'anneau et l'indice de la gaine étant comprise entre 1.10$^{-3}$ et 14.10$^{-3}$ et le rayon extérieur ($r_3$) de l'anneau étant compris entre 5,9 et 8,6 $\mu$m, caractérisée en ce que, la valeur de l'intégrale de la différence ($\Delta n(r)$) entre l'indice de la partie centrale de la fibre présentant un indice supérieure à l'indice de la gaine et l'Indice de la gaine entre un rayon nul et le rayon ($r_1$) extérieur de la partie centrale de la fibre optique présentant un indice supérieur à l'indice de la gaine est comprise entre 34.10$^{-3}$ et 38.10$^{-a}$ $\mu$m, et en ce que les rayons ($r_1$; $r_2$; $r_3$) et les différences ($\Delta n_1$; $\Delta n_{2;}$ $\Delta n_3$) entre les indices de la partie centrale de la fibre présentant un indice supérieur à l'indice de la gaine, de la tranchée enterrée et de l'anneau et l'indice de la gaine sont déterminés de manière à ce que la fibre optique présente une longueur d'onde de coupure théorique inférieure ou égale à 1900 nm, et, pour une longueur d'onde de 1650 nm, une dispersion chromatique Inférieure ou égale à -20 ps/(nm.km), une pente de dispersion chromatique négative, un rapport de la dispersion chromatique à la pente de dispersion chromatique entre 100 nm et 600 nm, une surface effective supérieure ou égale à 15 $\mu$m$^2$, et sur une bande de 1625 à 1675 nm, des pertes par courbures par enroulement de la fibre optique autour d'un manchon de 10 mm de rayon inférieures ou égales à 100 dB/m, et des pertes par courbure par enroulement de 100 tours de la fibre optique autours d'un manchon de 30 mm de rayon inférieures ou égales à 5.10$^{-3}$ dB.

La fibre peut en outre présenter sur une bande de 1625 nm à 1675 nm,

- des pertes par courbure par enroulement de la fibre optique autour d'un manchon de 10 mm de rayon inférieures ou égales à 20 dB/m,
- des pertes par courbure par enroulement de 100 tours de la fibre optique autour d'un manchon de 30 mm par rayon inférieures ou égales à 10$^{-4}$ dB, et à une longueur d'onde de 1650 nm,
- le rayon ($r_1$) de la partie de la fibre présentant un indice supérieur à celui de la gaine est compris entre 1,3 et 2,1 $\mu$m;
- la différence ($\Delta n_2$) entre l'indice de la tranchée déprimée et l'indice de la gaine est comprise entre -9.10$^{-3}$ et -4,5.10$^{-3}$;
- le rayon extérieur ($r_2$) de cette tranchée est compris entre 3,4 et 6,2 $\mu$m;
- la différence ($\Delta n_3$) entre l'indice de l'anneau et l'indice de la gaine est comprise entre 1.10$^{-3}$ et 14.10$^{-3}$;
- le rayon extérieur ($r_3$) de cet anneau est compris entre 5,9 et 8,6 $\mu$m;
- le double de l'intégrale du produit du rayon par l'indice entre un rayon nul et le rayon ($r_1$) extérieur de la partie centrale de la fibre présentant un indice supérieur à celui de la gaine est compris entre 51.10$^{-3}$ et 80.10$^{-3}$ $\mu$m$^2$;
- l'intégrale de l'indice entre un rayon nul et le rayon ($r_1$) extérieur de la partie centrale de la fibre présentant un indice supérieur à celui de la gaine est comprise entre 34.10$^{-3}$ et 38.10$^{-3}$ $\mu$m;
- le double de l'intégrale du produit du rayon par l'indice entre le rayon ($r_1$) extérieur de la partie centrale de la fibre présentant un indice supérieur à celui de la gaine et le rayon extérieur ($r_2$) de la partie enterrée est compris entre -200.10$^{-3}$ et -90.10$^{-3}$ $\mu$m$^2$;
- le double de l'intégrale du produit du rayon par l'indice entre le rayon extérieur ($r_2$) de la partie enterrée et le rayon extérieur ($r_3$) de l'anneau est compris entre 100.10$^{-3}$ et 220.10$^{-3}$ $\mu$m$^2$;
- le double de l'intégrale du produit du rayon par l'indice entre un rayon nul et lé rayon extérieur ($r_3$) de l'anneau est compris entre 30.10$^{-3}$ et 110.10$^{-3}$ $\mu$m$^2$.
- une dispersion modale de polarisation inférieure ou égale à 0,2 ps/km$^{1/2}$, voire 0,1 ps/km$^{1/2}$, et de préférence inférieure ou égale à 0,05 ps/km$^{1/2}$.

- une atténuation inférieure à 1 dB/km et de préférence à 0,8 dB/km.

Le fibre présente avantageusement un profil d'indice en rectangle ou trapèze avec une tranchée enterrée et un anneau; les paramètres de ce profil peuvent être choisis parmi les suivante :

- la différence ($\Delta n_1$) entre l'indice du rectangle ou du trapèze et l'indice de la gaine est comprise entre $16.10^{-3}$ et $30.10^{-3}$;

L'invention propose en outre un système de transmission, présentant :

- un émetteur de signaux optiques dans la bande de 1625 à 1675 nm,
- une section de fibre optique de ligne ($6_i$);
- une section ($12_i$) d'une fibre optique du genre visé ci-dessus, compensant la dispersion dans la fibre optique de ligne.

Dans un mode de réalisation, la fibre de ligne comprend de la fibre à saut d'indice. Dans ce cas, il est préférable que la fibre de compensation de dispersion présente :

- une surface effective à 1650 nm supérieure ou égale à 17 $\mu$m$^2$, de préférence supérieure ou égale à 20 $\mu$m$^2$, voire supérieure ou égale à 22 $\mu$m$^2$;
- pour une valeur de longueur d'onde de 1650 nm, un rapport de la dispersion chromatique à la pente de dispersion chromatique compris entre 380 et 500 nm

et de préférence compris entre 400 et 480 nm.

Dans un autre mode de réalisation, la fibre de ligne comprend de la fibre à dispersion décalée positive. Dans ce cas, il est préférable que la fibre de compensation de dispersion présente :

- une surface effective à 1650 nm supérieure ou égale à 18 $\mu$m$^2$, de préférence supérieure ou égale à 20 $\mu$m$^2$;
- pour une valeur de longueur d'onde de 1650 nm, un rapport de la dispersion chromatique à la pente de dispersion chromatique compris entre 180 et 300 nm et de préférence compris entre 200 et 280 nm.

D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un système de transmission selon un mode de réalisation de l'invention;
- figures 2 et 3, des profils de fibres de compensation de dispersion susceptibles d'être utilisées dans le système de la figure 1.

L'invention propose une fibre de compensation de dispersion chromatique, adaptée à compenser la dispersion chromatique et la pente de dispersion chromatique dans un système de transmission à fibre optique utilisant des signaux en bande U, qui présente aussi des pertes par courbure acceptables.

La fibre présente donc les caractéristiques suivantes :

- une longueur d'onde de coupure théorique inférieure ou égale à 1900 nm; et pour une longueur d'onde de 1650 nm:
- une dispersion chromatique inférieure ou égale à -20 ps/(nm.km);
- une pente de dispersion chromatique négative,
- un rapport de la dispersion chromatique à la pente de dispersion chromatique compris entre 100 et 600 nm;
- une surface effective supérieure ou égale à 15 $\mu$m$^2$ et sur une bande de 1625 à 1675 nm,
- des pertes par courbure par enroulement de la fibre autour d'un manchon de 10 mm de rayon inférieures ou égales à 100 dB/m;
- des pertes par courbure par enroulement de 100 tours de la fibre autour d'un manchon de 30 mm de rayon inférieures ou égales à $5.10^{-3}$ dB.

Le comportement monomode en câble peut être évolué en mesurant la longueur d'onde de coupure suivant la norme UIT-T G650. Une telle valeur de longueur d'onde de coupure théorique assure un comportement monomode en câble, et donc une bonne propagation des signaux dans le système de transmission; on notera que la longueur d'onde de coupure effective en câble est typiquement inférieure de quelques centaines de nanomètres à la longueur d'onde d'onde de coupure théorique.

Les valeurs négatives de la dispersion chromatique et de la pente de dispersion chromatique permettent de compenser la dispersion chromatique et la pente de dispersion chromatique d'une fibre SMF ou NZ-DSF+; une valeur

EP 1 312 950 B1

très négative de la dispersion chromatique permet de limiter la longueur de fibre de compensation nécessaire pour compenser la dispersion chromatique cumulée dans la fibre de ligne.

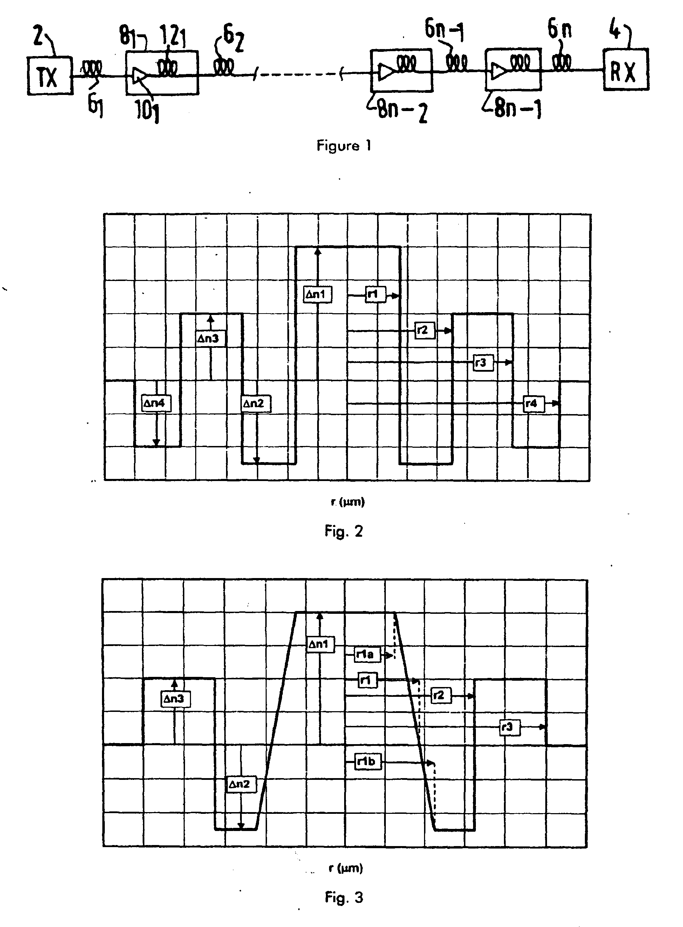

La valeur de l'aire effective limite les pertes ou les effets non-linéaires susceptibles d'apparaître à forte puissance du signal se propageant dans la fibre de compensation, notamment dans le mode de réalisation de la figure 1 d'un système de transmission selon l'invention. Une valeur d'aire effective supérieure à 15 $\mu$m$^2$ à 1650 nm permet de limiter les effets non-linéaires dans toute la bande U.

Les pertes par courbure sont évaluées de façon connue en soi par enroulement de 100 tours de la fibre sur un mandrin de rayon de 30 mm et mesure des pertes induites par cet enroulement; la limite sur les pertes par courbure assure que la fibre de l'invention supporte la mise en câble comme dans le mode de réalisation de la figure 1. Une autre méthode de mesure consiste à enrouler la fibre sur une demi-boucle de rayon 10mm et à mesurer les pertes induites par cet enroulement. Dans ce dernier cas, le résultat donné est exprimé sous la forme d'une perte linéique en dB/m. Dans un cas comme dans l'autre, les pertes sont représentatives de la capacité de la fibre à être effectivement utilisée dans un système de transmission, que ce soit dans un répéteur ou comme fibre de ligne.

La figure 1 est une représentation schématique d'un système de transmission selon un mode de réalisation de l'invention. On a représenté à la figure 1 l'émetteur TX 2 et le récepteur RX 4 du système de transmission, entre lesquels s'étend la fibre de ligne. La fibre de ligne est formée de tronçons $6_l$ à $6_n$, séparés par des répéteurs $8_1$ à $8_{n-1}$; chaque répéteur $8_i$ présente un amplificateur $10_i$, dont la structure est sans incidence sur le fonctionnement de l'invention, et n'est donc pas décrite. En sortie de l'amplificateur est prévue une section $12_i$ d'une fibre de compensation de dispersion. La lumière provenant de la fibre de ligne est donc amplifiée, puis traverse la section de fibre de compensation de dispersion, dans laquelle la dispersion chromatique et la pente de dispersion chromatique sont compensées. La fibre de compensation de dispersion est du type décrit plus bas, en référence aux exemples des figures 2 et 3. Le système de transmission utilise des signaux optiques avec des longueurs d'onde qui s'étendent au-delà de 1625 nm, dans la bande U. La fibre de ligne peut être, comme expliqué plus bas, une fibre SMF ou encore une fibre à dispersion décalée, comme la NZ-DSF+.

Des modifications au système de transmission de la figure 1 sont possibles: ainsi, peuvent être prévus des filtres, un amplificateur en aval de la première fibre de compensation de dispersion ou en aval de la fibre de compensation de dispersion, etc. Dans l'exemple de la figure 1, les dispositifs $8_i$ sont qualifiés de "répéteurs", en ce qu'ils comprennent un amplificateur; on pourrait aussi séparer les amplificateurs et les sections de fibre de compensation de dispersion, un boîtier comprenant une fibre de compensation de dispersion (avec ou sans amplificateur) pouvant alors être appelé "module de compensation". On pourrait aussi utiliser la fibre de compensation de dispersion au moins partiellement comme fibre de ligne. Dans ce cas, au lieu d'être enroulée dans un boîtier, la fibre s'étend le long du système de transmission. Les figures 2 et 3 montrent des profils d'indice de consigne possibles pour des fibres de compensation de dispersion selon l'invention; on a représenté en abscisses la distance au centre de la fibre, en micromètres, et en ordonnées la différence d'indice avec l'indice de la gaine. La figure 2 montre l'exemple d'un profil en rectangle et anneau, et la figure 3 montre l'exemple d'un profil en trapèze et anneau. Sur la figure 2 apparaissent donc, en partant du centre de la fibre :

-    une partie centrale de rayon $r_1$ avec un indice sensiblement constant, présentant avec l'indice de la gaine une différence $\Delta n_1$ positive;
-    une partie annulaire s'étendant entre les rayons $r_1$ et $r_2$, présentant avec l'indice de la gaine une différence $\Delta n_2$ négative; l'ensemble constituant un profil d'indice dit "en rectangle avec une tranchée enterrée ou déprimée". Autour de la tranchée enterrée, la fibre présente entre les rayons $r_2$ et $r_3$ un anneau, c'est-à-dire une partie d'indice supérieur à l'indice de la gaine, d'où le qualificatif de profil en rectangle avec une tranchée enterrée et un anneau. On note $\Delta n_3$ la différence entre l'indice de l'anneau et l'indice de la gaine.

La figure 3 montre un profil d'indice en trapèze avec une tranchée enterrée et un anneau. La seule différence entre ce profil et celui de la figure 2 réside dans le fait que la partie centrale a une forme de trapèze et non de rectangle, avec un rayon minimum $r_{la}$, un rayon maximum $r_{1b}$; on peut alors noter $r_1$ la valeur de rayon en deçà de laquelle l'indice est supérieur à celui de la gaine.

On donne maintenant des exemples de réalisation de fibres de compensation de dispersion selon l'invention. Dans un premier mode de réalisation, la fibre est adaptée à la compensation de la dispersion chromatique d'une fibre à saut d'indice, et dans un deuxième mode de réalisation, la fibre est adaptée à la compensation de la dispersion chromatique d'une fibre à dispersion décalée positive.

Typiquement, pour une longueur d'onde de 1650 nm, une fibre SMF de l'état de la technique, commercialisée par la demanderesse sous la référence ASMF 200 , présente une dispersion chromatique C de l'ordre de 23 ps/(nm.km), et une pente de dispersion chromatique C' de l'ordre de 0,052 ps/(nm$^2$.km). De façon classique, on entend par pente de dispersion chromatique la dérivée partielle $\partial C/\partial\lambda$ de la dispersion chromatique par rapport à la longueur d'onde. Le rapport C/C' de la dispersion chromatique à la pente de dispersion chromatique est donc voisin de 440 nm, et plus précisément, peut être compris entre 400 nm et 480 nm pour la longueur d'onde de 1650 nm.

La fibre de l'invention peut donc présenter dans le premier mode de réalisation les caractéristiques supplémentaires suivantes :

- une dispersion chromatique C inférieure à - 50ps/nm-km;
- un rapport C/C' de la dispersion chromatique à la pente de dispersion chromatique compris entre 380nm et 500nm pour une longueur d'onde de 1650 nm; et
- une surface effective supérieure ou égale à 17 $\mu m^2$ pour une longueur d'onde de 1650 nm, voire encore supérieure ou égale à 20 ou 22 $\mu m^2$.

Les valeurs négatives de la dispersion chromatique et de la pente de dispersion chromatique permettent de compenser la dispersion chromatique et la pente de dispersion chromatique d'une fibre SMF. La plage proposée pour le rapport C/C' est adaptée à la compensation de la fibre SMF dans la bande U, autour de 1650 nm.

Les valeurs de l'aire effective proposées limitent les pertes ou les effets non-linéaires, plus encore que la valeur de 15 $\mu m^2$ mentionnée plus haut.

La fibre de compensation, outre ces différentes caractéristiques, peut présenter une ou plusieurs des caractéristiques additionnelles suivantes, mesurées à 1650 nm sauf indication contraire :

- une sensibilité aux micro-courbures inférieure ou égale à 1, et de préférence inférieure ou égale à 0,5;
- une dispersion modale de polarisation inférieure ou égale à 0,2 ps/km$^{1/2}$, voire 0,1 ps/km$^{1/2}$, et de préférence inférieure ou égale à 0,05 ps/km$^{1/2}$;
- un rapport entre la dispersion chromatique et l'atténuation inférieur ou égal à -100 ps/(nm-dB), et de préférence inférieur ou égal à -150 ps/(nm-dB), pour une longueur d'onde entre 1625 et 1675 nm;
- une atténuation inférieure à 1 dB/km et de préférence à 0,8 dB/km;

La valeur de la dispersion chromatique permet de limiter la longueur de fibre de compensation de dispersion, et donc l'atténuation dans cette fibre. La sensibilité de la fibre aux micro-courbures est évaluée de façon relative, par rapport à la fibre commercialisée par la demanderesse sous la référence ASMF 200; on peut employer la méthode d'écrasement de la fibre entre deux grilles, connue en soi. La valeur de sensibilité aux micro-courbures proposée permet aussi d'améliorer la c&blabilité de la fibre. En effet, limiter les pertes par micro-courbures permet de limiter les incréments d'atténuation de la fibre dans le câble. Ceci améliore la tenue de la fibre dans le câble.

Les bornes sur les pertes par courbures ou sur la sensibilité aux microcourbures permettent notamment un enroulement de la fibre de compensation de dispersion dans les répéteurs. La valeur de la dispersion modale de polarisation assure une bonne transmission pour les hauts débits. La valeur de l'atténuation est représentative des pertes dans la fibre de compensation. Le rapport entre la dispersion chromatique et l'atténuation est représentatif de la capacité de la fibre à compenser la dispersion chromatique : une forte valeur de dispersion chromatique en valeur absolue est avantageuse pour une compensation rapide de la dispersion chromatique; une valeur faible de l'atténuation limite les pertes dans la fibre de compensation de dispersion.

On donne maintenant des exemples de fibres selon le premier mode de réalisation de l'invention. Le tableau I donne des valeurs des paramètres de profil pour ces exemples, avec les notations données plus haut en référence aux figures 2 et 3.

Tableau I.

|  | $r_{1a}$ ($\mu m$) | $r_1$ ($\mu m$) | $r_{1b}$ ($\mu m$) | $r_2$ ($\mu m$) | $r_3$ ($\mu m$) | $10^3 \Delta n_1$ | $10^3 \Delta n_2$ | $10^3 \Delta n_3$ |
|---|---|---|---|---|---|---|---|---|
| Fibre S1 | 1,74 | 1,74 | 1,74 | 5,22 | 6,70 | 20,6 | -6,1 | 11,0 |
| Fibre S2 | 1,67 | 1,67 | 1,67 | 4,50 | 7,04 | 21,1 | -6,4 | 4,0 |
| Fibre S3 | 2,10 | 2,10 | 2,10 | 5,14 | 6,95 | 16,2 | -8,0 | 9,4 |
| Fibre S4 | 1,83 | 1,83 | 1,83 | 4,64 | 6,94 | 19,2 | -7,8 | 6,7 |
| Fibre S5 | 1,47 | 1,47 | 1,47 | 5,55 | 6,99 | 23,9 | -4,6 | 6,2 |
| Fibre S6 | 1,36 | 1,36 | 1,36 | 4,54 | 7,82 | 27,6 | -5,3 | 3,9 |
| Fibre S7 | 1,25 | 1,68 | 1,78 | 5,09 | 6,43 | 24,3 | -5,5 | 7,7 |
| Fibre S8 | 1,37 | 1,82 | 1,96 | 4,51 | 6,87 | 22,2 | -6,9 | 5,3 |
| Fibre S9 | 1,29 | 1,59 | 1,66 | 4,62 | 6,3 | 25,5 | -6,4 | 7,7 |

Les fibres S1 à S6 présentent un profil en rectangle avec tranchée enterrée et anneau, du genre de la figure 2. Les fibres S7 à S9 présentent un profil du type trapèze avec tranchée enterrée et anneau, représenté à la figure 3. Le tableau II donne des caractéristiques optiques des fibres du tableau I.

Tableau II.

|  | $\lambda_{cth}$ nm | $2W_{o2}$ $\mu$m @1650nm | $S_{eff}$ $\mu$m$^2$ @1650nm | C ps/nm-km @1650nm | C/C' nm @1650nm | PC 10mm dB/m @1650nm | PC 10mm dB/m @1675nm |
|---|---|---|---|---|---|---|---|
| Fibre S1 | 1880 | 5,2 | 22 | -89 | 430 | 0,05 | <20 |
| Fibre S2 | 1700 | 5,1 1 | 20,3 | -85 | 440 | 0,34 | < 20 |
| Fibre S3 | 1895 | 5,7 | 27,9 | -74 | 450 | 0,91 1 | <20 |
| Fibre S4 | 1779 | 5,4 | 24,0 | -95 | 470 | 0,78 | <20 |
| Fibre S5 | 1686 | 4,8 | 18,0 | -85 | 430 | 0,72 | <20 |
| Fibre S6 | 1786 | 4,7 | 17,1 | -130 | 420 | 0,05 | <20 |
| Fibre S7 | 1695 | 4,8 | 17,7 | -85 | 440 | 0,04 | <20 |
| Fibre S8 | 1759 | 5 | 19,6 | -87 | 440 | 0,03 | <20 |
| Fibre S9 | 1735 | 4,8 | 18,1 | -110 | 470 | 0,04 | <20 |

Le tableau II montre que les différentes fibres du tableau I présentent les caractéristiques de propagation mentionnées plus haut. Les pertes par courbures pour un enroulement de 100 tours de fibre autour d'un manchon de 30 mm de rayon sont inférieures dans tous les cas à 10$^{-4}$ dB, pour une longueur d'onde de 1675 nm.

On donne maintenant un exemple de système de transmission utilisant comme fibre de ligne une fibre SMF du type ASMF200 , et comme fibre de compensation de dispersion la fibre S6 du tableau 1. Plus spécifiquement, la fibre SMF présente à 1650 nm une dispersion chromatique de l'ordre de 23 ps/(nm.km). La pente de dispersion chromatique à 1650 nm est de l'ordre de 0,052 ps/(nm$^2$.km). Le rapport C/C' de la dispersion chromatique à la pente de dispersion chromatique a une valeur voisine de 440 nm. Chaque tronçon $6_i$ de la fibre de ligne a une longueur Le de 100 km. Chaque section $12_i$ de la fibre de compensation de dispersion présente une longueur de 17,5 km. La dispersion chromatique et la pente de dispersion chromatique cumulées dans un tronçon de fibre de ligne et dans une section de fibre de compensation de dispersion présentent les valeurs fournies dans le tableau III, pour différentes valeurs de longueur d'onde dans la bande U. Compte tenu des valeurs proposées dans le système, la dispersion chromatique cumulée reste inférieure en bande U à 50 ps/nm, voire même à 25 ps/nm. Le tableau donne aussi les pertes par courbure de la fibre de compensation de dispersion pour un enroulement de la fibre autour d'un manchon de 10 mm de rayon (pertes linéiques exprimées en dB/m).

Tableau III

|  | 1625 nm | 1650 nm | 1675 nm |
|---|---|---|---|
| C cumulée (ps/nm) | 12,1 | 0,0 | -12,6 |
| C' cumulée (ps/nm$^2$) | -0,098 | -0,236 | 0,001 |
| PPC 10 mm (dB/m) | <20 | <20 | <20 |
| PPC 30 mm (dB) | < 10$^{-4}$ | <10$^{-4}$ | < 10$^{-4}$ |

Le tableau IV montre à titre de comparaison les mêmes paramètres pour un système utilisant une fibre de compensation de dispersion de l'état de la technique, du genre décrit dans US-A-5 361 319. La fibre est une fibre présentant un profil du genre représenté à la figure 8 du brevet - profil en rectangle avec une tranchée enterrée et un anneau. Les caractéristiques du profil sont extraites du tableau 1, à savoir :

- rayon de coeur : 1,5 $\mu$m;
- différence d'indice entre le coeur et la gaine : 1,8 %;
- rayon extérieur de la tranchée enterrée : 3,7 $\mu$m;
- différence d'indice entre la tranchée et la gaine : -0,2 %;

- rayon extérieur de l'anneau : 7,9 $\mu$m;
- différence d'indice entre l'anneau et la gaine : 0,16 %. '

Dans le système, chaque tronçon de la fibre de ligne a une longueur Le de 100 km. Chaque section de la fibre de compensation de dispersion selon l'état de la technique présente une longueur de 33,2 km, choisie pour minimiser la dispersion chromatique cumulée à 1650 nm.Les unités sont les mêmes que dans le tableau III.

Tableau IV

|  | 1625 nm | 1650 nm | 1675 nm |
|---|---|---|---|
| C cumulée (ps/nm) | -102,6 | 0,0 | 102,9 |
| C' cumulée (ps/nm$^2$) | 3,573 | 3,587 | 3,699 |
| PPC 10 mm (dB/m) | <20 | <20 | <20 |
| PPC 30 mm (dB) | < 10$^{-4}$ | < 10$^{-4}$ | < 10$^{-4}$ |

La comparaison des tableaux III et IV montre que la fibre de l'état de la technique présente des caractéristiques acceptables en ce qui concerne les pertes par courbure en bande U - mais ne permet pas de compenser la dispersion chromatique ou la pente de dispersion chromatique dans cette bande.

Le tableau V donne les mêmes paramètres que le tableau IV, mais pour une autre fibre du brevet US-A-5 361 319. La fibre présente encore un profil du genre représenté à la figure 8 du brevet - profil en rectangle avec une tranchée enterrée et un anneau. Les caractéristiques du profil sont encore extraites du tableau 1 :

- rayon de coeur : 1,43 $\mu$m;
- différence d'indice entre le coeur et la gaine : 1,6 %;
- rayon extérieur de la tranchée enterrée : 4,87 $\mu$m;
- différence d'indice entre la tranchée et la gaine : -0,4 %;
- rayon extérieur de l'anneau : 6,5 $\mu$m;
- différence d'indice entre l'anneau et la gaine : 0,32 %.

Dans le système, chaque tronçon de la fibre de ligne a une longueur $L_G$ de 100 km. Chaque section de la fibre de compensation de dispersion selon l'état de la technique présente une longueur de 19,9 km, choisie pour minimiser la dispersion chromatique cumulée à 1650 nm.

Tableau V

|  | 1625 nm | 1650 nm | 1675 nm |
|---|---|---|---|
| C cumulée (ps/nm) | 15,6 | 0,0 | -24,.2 |
| C' cumulée (ps/nm$^2$) | -0,184 | -0,572 | -0,746 |
| PPC 10 mm (d B/m) | < 20 | > 20 | > 20 |
| PPC 30 mm (dB) | < 10$^{-4}$ | < 10$^{-4}$ | > 10$^{-4}$ |

Le tableau V montre que la dispersion chromatique cumulée en bande U reste inférieure en valeur absolue à 50 ps/nm, ce qui constitue une limite acceptable. Toutefois, les pertes par courbures du tableau V prennent des valeurs beaucoup plus importantes que celles du tableau III. Ainsi, la fibre de l'état de la technique est difficilement utilisable en bande U, du fait de ses fortes valeurs de pertes par courbure. En revanche, la fibre de l'invention est mieux adaptée que la fibre de l'état de la technique à la compensation de la dispersion chromatique de la fibre SMF, dans la bande U, tout en présentant des valeurs acceptables de pertes par courbure.

On donne maintenant des exemples de réalisation de fibres de compensation de dispersion selon le deuxième mode de réalisation de l'invention. La fibre est adaptée à la compensation de la dispersion chromatique d'une fibre à dispersion décalée positive. Typiquement, pour une longueur d'onde de 1650 nm, une fibre à dispersion décalée de l'état de la technique, comme celle commercialisée par la demanderesse sous la marque TeraLight, présente une dispersion chromatique C de l'ordre de 14 ps/(nm.km) et une pente de dispersion chromatique C' de l'ordre de 0,058 ps/(nm$^2$.km). Le rapport C/C' est voisin de 240 nm.

Dans le deuxième mode de réalisation, la fibre de l'invention peut présenter les caractéristiques supplémentaires suivantes :

- une dispersion chromatique C inférieure à -50ps/nm-km pour une longueur d'onde de 1650 nm;
- un rapport C/C' de la dispersion chromatique à la pente de dispersion chromatique compris entre 180 et 300 pour une longueur d'onde de 1650 nm; voire compris entre 200 et 280; et
- une surface effective supérieure ou égale à 18, voire 20 $\mu$m$^2$ pour une longueur d'onde de 1650 nm.

Ces caractéristiques présentent les avantages décrits plus haut, en ce qui concerne le premier mode de réalisation.

La fibre du deuxième mode de réalisation peut aussi présenter les caractéristiques optiques additionnelles mentionnées en référence au premier mode de réalisation

Le tableau VI donne des valeurs des paramètres de profil pour des exemples de fibre, avec les notations données plus haut en référence aux figures 2 et 3.

Tableau VI

|  | $r_{1a}$ ($\mu$m) | $r_1$ ($\mu$m) | $r_{1b}$ ($\mu$m) | $r_2$ ($\mu$m) | $r_3$ ($\mu$m) | $10^3\Delta n_1$ | $10^3\Delta n_2$ | $10^3\Delta n_3$ |
|---|---|---|---|---|---|---|---|---|
| Fibre T1 | 1,53 | 1,53 | 1,53 | 5,18 | 8,26 | 23,7 | -5,9 | 4,2 |
| Fibre T2 | 1,85 | 1,85 | 1,85 | 4,93 | 7,88 | 19,4 | -8,1 | 5,2 |
| Fibre T3 | 1,63 | 1,63 | 1,63 | 5,20 | 7,66 | 22,0 | -6,4 | 5,6 |
| Fibre T4 | 1,66 | 1,66 | 1,66 | 4,31 | 8,11 | 22,7 | -8,8 | 3,9 |
| Fibre T5 | 1,39 | 1,39 | 1,39 | 5,21 | 7,72 | 26,5 | -5,4 | 5,9 |
| Fibre T6 | 1,34 | 1,79 | 1,92 | 5,81 | 7,37 | 22,5 | -6,3 | 10 |
| Fibre T7 | 1,25 | 1,56 | 1,66 | 5,02 | 7,10 | 26,8 | -8,3 | 6,9 |

Les fibres T1 à T5 présentent un profil en rectangle avec tranchée enterrée et anneau, du genre de la figure 2. Les fibres T6 et T7 présentent un profil du type trapèze avec tranchée enterrée et anneau, représenté à la figure 3. Le tableau VII donne des caractéristiques optiques des fibres du tableau VI.

Tableau VII.

|  | $\lambda_{cth}$ nm | $2W_{02}$ $\mu$m @1650nm | $S_{eff}$ $\mu$m$^2$ @1650nm | C ps/nm-km @1650nm | C/C' nm @1650nm | PC $\phi$20mm dB/m @1650nm | PC $\phi$20mm dB/m @1675nm |
|---|---|---|---|---|---|---|---|
| Fibre T1 | 1829 | 4,8 | 17,6 | -95 | 255 | 0,53 | <20 |
| Fibre T2 | 1872 | 5,1 | 20,5 | -82 | 230 | 0,13 | <20 |
| Fibre T3 | 1818 | 4,9 | 18,8 | -93 | 250 | 0,56 | <20 |
| Fibre T4 | 1828 | 4,8 | 18,3 | -107 | 255 | 0,22 | <20 |
| Fibre T5 | 1886 | 4,7 | 17,4 | -125 | 270 | 0,11 | <20 |
| Fibre T6 | 1871 | 4,8 | 18,2 | -85 | 235 | 0,12 | <20 |
| Fibre T7 | 1795 | 4,4 | 15,1 | -116 | 215 | 0,18 | <20 |

Le tableau VII montre que les différentes fibres du tableau VI présentent les caractéristiques de propagation mentionnées plus haut. Comme dans le cas des fibres du tableau II, les pertes par courbures mesurées à une longueur d'onde de 1675 nm pour un enroulement de 100 tours de fibre autour d'un manchon de 30 mm de rayon sont inférieures à 10$^{-4}$ dB.

On donne maintenant un exemple de système de transmission utilisant comme fibre de ligne une fibre NZ-DSF+ du type TeraLight, et comme fibre de compensation de dispersion la fibre T4 du tableau VI. La fibre TeraLight présente à 1650 nm les valeurs de dispersion chromatique et de pente de dispersion chromatique précisées plus haut, avec un rapport C/C' de 240 nm. Chaque tronçon $6_i$ de la fibre de ligne a une longueur $L_G$ de 100 km. Chaque section $12_i$ de la fibre de compensation de dispersion présente une longueur de 13,2 km. La dispersion chromatique et la pente de dispersion chromatique cumulées dans un tronçon de fibre de ligne et dans une section de fibre de compensation de dispersion présentent les valeurs fournies dans le tableau VIII, pour différentes valeurs de longueur d'onde dans la bande U. Comme plus haut, le tableau indique aussi les pertes par courbures.

Tableau VIII

|  | 1625 nm | 1650 nm | 1675 nm |
|---|---|---|---|
| C cumulée (ps/nm) | -19,8 | 0,0 | 10,6 |
| C' cumulée (ps/nm$^2$) | 0,596 | 0,321 | 0,263 |
| PPC 10 mm (dB/m) | <20 | <20 | <20 |
| PPC 30 mm (dB) | <10$^{-4}$ | <10$^{-4}$ | <10$^{-4}$ |

Avec ces valeurs, comme dans le mode de réalisation précédent, la dispersion chromatique cumulée dans le système reste inférieure en valeur absolue en bande U à 50 ps/nm, voire même à 25 ps/nm.

Le tableau IX, comme le tableau IV, montre à titre de comparaison la dispersion chromatique et la pente de dispersion chromatique cumulées pour un système utilisant une fibre de compensation de dispersion de l'état de la technique; cette fibre de l'état de la technique est la même que celle du tableau IV, à savoir la fibre de l'exemple 1 du brevet US-A-5 361 819 avec les caractéristiques de profil mentionnées plus haut. Dans l'exemple, la longueur de fibre de l'état de la technique est de 20,4 km, pour une longueur de fibre NZ-DSF de 100 km. Cette longueur est choisie de sorte à limiter la dispersion chromatique cumulée à 1650 nm. Le tableau IX montre que la fibre de l'état de la technique présente des pertes par courbure acceptables, mais ne permet pas de compenser en bande U la dispersion chromatique et la pente de dispersion chromatique.

Tableau IX

|  | 11625 nm | 11650 nm | 1675 nm |
|---|---|---|---|
| C cumulée (ps/nm) | -129,6 | 0,0 | 132,1 |
| C' cumulée (ps/nm$^2$) | 4,123 | 4,277 | 4,519 |
| PPC 10 mm (dB/m) | <20 | <20 | <20 |
| PPC 30 mm (dB) | <10$^{-4}$ | <10$^{-4}$ | <10$^{-4}$ |

Le tableau X est l'analogue du tableau V, pour le même type de fibre de l'état de la technique; le système est formé de fibre NZ-DSF+ du type TeraLight sur une longueur de 100 km et de fibre de l'état de la technique, sur une longueur de 12,3 km.

Tableau X

|  | 1625 nm | 1650 nm | 1675 nm |
|---|---|---|---|
| C cumulée (ps/nm) | -57,0 | 0,0 | 54,0 |
| C' cumulée (ps/nm$^2$) | 0,366 | 0,118 | 0,074 |
| PPC 10 mm (dB/m) | <20 | >20 | >20 |
| PPC 30 mm (dB) | < 10$^{-4}$ | <10$^{-4}$ | > 10$^{-4}$ |

Comme dans le tableau V, il apparaît que les valeurs de dispersion chromatique cumulée sont proches en valeur absolue de la limite acceptable de 50 ps/nm. Toutefois, les pertes par courbures sont importantes.

Les tableaux IX et X montrent que la fibre de l'invention permet une bonne compensation de la dispersion chromatique et de la pente de dispersion chromatique en bande U, tout en présentant des pertes par courbure acceptables dans cette bande. En revanche, les fibres de l'état de la technique proposées à titre de comparaison présentent soit une capacité à compenser la dispersion chromatique et la pente de dispersion chromatique, soit des pertes par courbure acceptables, mais pas les deux à la fois.

De façon générale, on peut qualifier le profil de la fibre de l'invention comme suit. Comme indiqué plus haut, le profil est un profil en trapèze ou en rectangle avec une tranchée enterrée ou déprimée, et un anneau. La partie centrale présente une différence avec l'indice de la gaine qui vérifie

$$16.10^{-3} \leq \Delta n_1 \leq 30.10^{-3}$$

Il est avantageux que le rayon $r_1$ exprimé en micromètres vérifie

$$1,3 \leq r_1 \leq 2,1 \ \mu m$$

Pour la tranchée enterrée, on peut choisir les valeurs de différence d'indice $\Delta n_2$ et de rayon extérieur $r_2$ de sorte à vérifier :

$$-9.10^{-3} \leq \Delta n_2 \leq -4,5.10^{-3}$$

et

$$3,4 \leq r_2 \leq 6,2 \ \mu m$$

Pour l'anneau, on peut choisir les valeurs de différence d'indice $\Delta n_3$ et de rayon extérieur $r_3$ de sorte à vérifier :

$$1.10^{-3} \leq \Delta n_3 \leq 14.10^{-3}$$

et

$$5,6 \leq r_3 \leq 8,6 \ \mu m$$

D'autres caractérisations de la fibre sont possibles. Ainsi, on peut utiliser le paramètre $S_1$ défini par.

$$S_1 = 2. \int_0^{r_1} \Delta n(r) r.dr$$

Ce paramètre est homogène au produit du carré d'un rayon par un indice. Ce paramètre s'applique simplement au profil en trapèze comme au profil en rectangle, et est représentatif de l'augmentation d'indice au voisinage du coeur de la fibre. Dans le cas d'un profil d'indice en rectangle, ce paramètre vaut $\Delta n_1.r_1^2$ ; il est de préférence compris entre $51.10^{-3}$ et $80.10^{-3} \ \mu m^2$.

Un autre paramètre possible est le paramètre $S_{01}$, qui s'écrit

$$S_{01} = \int_0^{r_1} \Delta n(r) dr$$

Ce paramètre est l'intégrale de l'indice entre dans le coeur en rectangle ou en anneau de la fibre. Physiquement, ce paramètre est représentatif de l'aire du coeur dans un plan rayon / indice. Il est de préférence compris entre $34.10^{-3}$ et $38.10^{-3} \ \mu m$.

On peut encore utiliser le paramètre $S_2$, défini par

$$S_2 = 2. \int_{r1}^{r2} \Delta n(r).r.dr$$

Ce paramètre est similaire au paramètre $S_1$, mais s'applique à la tranchée enterrée. Il est encore homogène au produit du carré d'un rayon par un indice. Ce paramètre est représentatif de la diminution d'indice dans la tranchée enterrée. Il est de préférence compris entre $-200.10^{-3}$ et $-90.10^{-3}$ $\mu m^2$.

De même, le paramètre $S_3$ défini par

$$S_3 = 2. \int_{r2}^{r3} \Delta n(r).r.dr$$

est homogène au produit du carré d'un rayon par un indice et est représentatif de l'augmentation d'indice dans l'anneau. Il est de préférence compris entre $100.10^{-3}$ et $220.10^{-3}$ $\mu m^2$.

Enfin, le paramètre $S_{123}$ qui s'écrit

$$S_{123} = 2. \int_{0}^{r3} \Delta n(r).r.dr$$

est la somme des paramètres $S_1$, $S_2$ et $S_3$ et est représentatif de l'augmentation d'indice dans l'ensemble de la fibre. Il est de préférence compris entre $30.10^{-3}$ et $110.10^{-3}$ $\mu m^2$.

Un de ces paramètres, ou la combinaison de plusieurs de ces paramètres permettent de définir le profil de la fibre de l'invention.

La fibre de l'invention peut être fabriquée par l'homme du métier à l'aide de techniques connues, comme le MCVD, l'OVD ou les autres techniques couramment utilisées pour la fabrication des fibres optiques.

Bien entendu, l'invention n'est pas limitée aux exemples proposés plus haut; les fibres de compensation de dispersion peuvent présenter des profils différents de ceux des figures 2 et 3; les fibres de lignes peuvent aussi être différentes de la fibre SMF et de la fibre NZ-DSF données en exemples. La structure du système de transmission peut différer de celle représentée à la figure 1.

## Revendications

**1.** Une fibre optique, comportant, successivement du centre de la fibre vers la périphérie un profile d'indice en trapèze ou rectangle avec une tranchée enterrée et un anneau puis une gaine d'indice constant, la différence ($\Delta n_1$) entre l'indice maximum du trapèze ou du rectangle et l'indice de la gaine étant comprise entre $16.10^{-3}$ et $30.10^{-3}$ et le rayon extérieur ($r_1$) de la partie centrale de la fibre optique présentant un indice supérieur à l'indice de la gaine étant compris entre 1,3 et 2,1 $\mu m$, la différence ($\Delta n_2$) entre l'Indice de la tranchée enterrée et l'Indice de la gaine étant comprise entre $-9.10^{-3}$ et $-4.5.10^{-3}$ et le rayon extérieur ($r_2$) de la tranchée enterrée étant compris entre 3,4 et 6,2 $\mu m$, la différence ($\Delta n_3$) entre l'indice de l'anneau et l'indice de la gaine étant comprise entre $1.10^{-3}$ et $14.10^{-3}$ et le rayon extérieur ($r_3$) de l'anneau étant compris entre 5,9 et 8,6 $\mu m$, **caractérisée en ce que**, la valeur de l'intégrale de la différence ($\Delta n(r)$) entre l'indice de la partie centrale de la fibre présentant un indice supérieure à l'indice de la gaine et l'indice de la gaine entre un rayon nul et le rayon ($r_1$) extérieur de la partie centrale de la fibre optique présentant un indice supérieur à l'indice de la gaine est comprise entre $34,10^{-3}$ et $38.10^{-a}$ $\mu m$, et **en ce que** les rayons ($r_1$; $r_2$; $r_3$) et les différences ($\Delta n_1$; $\Delta n_2$; $\Delta n_3$) entre les indices de la partie centrale de la fibre présentant un indice supérieur à l'indice de la gaine, de la tranchée enterrée et de l'anneau et l'indice de la gaine sont déterminés de manière à ce que la fibre optique présente une longueur d'onde de coupure théorique inférieure ou égale à 1900 nm, et, pour une longueur d'onde de 1650 nm, une dispersion chromatique inférieure ou égale à -20 ps/(nm.km), une pente de dispersion chromatique négative, un rapport de la dispersion chromatique à la pente de dispersion chromatique entre 100 nm et 600 nm, une surface effective supérieure ou égale à 15 $\mu m^2$, et sur une bande de 1625 à 1675 nm, des pertes par courbures par enroulement de la fibre optique autour d'un manchon de 10 mm de rayon inférieures ou égales à 100 dB/m, et des pertes par courbure par enroulement de 100 tours de la fibre optique autours d'un manchon de 30 mm de rayon inférieures ou égales à $5.10^{-3}$ dB.

2. La fibre de la revendication 1, présentant la valeur du double de l'intégrale du produit du rayon par la différence ($\Delta n$ (r)) entre l'indice de la partie centrale de la fibre optique présentant un indice supérieur à l'indice de la gaine et l'indice de la gaine entre un rayon nul et le rayon ($r_1$) extérieur de la partie centrale de la fibre optique présentent un indice supérieur à l'Indice de la gaine étant comprise entre $51.10^{-3}$ et $80.\ 10^{-3}$ $\mu m^2$.

3. La fibre optique de la revendication 1 ou 2. présentant la valeur du double de l'Intégrale du produit du rayon par la différence ($\Delta n(r)$) entre l'indice de la tranchée enterrée et l'Indice de la gaine entre le rayon ($r_1$) extérieur de la partie Centrale de fibre optique présentant un Indice supérieur à l'IndIce de la gaine et la rayon ($f_2$) extérieur de la tranchée enterrée étant comprise entre $-200.10^{-3}$ et $-80.10^{-3}$ $\mu m^2$,

4. La fibre optique de l'une de revendications 1 à 3, présentant la valeur du double de l'Intégrale du produit du rayon par la différence ($\Delta n(r)$) entre l'indice de l'anneau et l'indice de la gaine entre le rayon ($r_2$) extérieur de la tranchée enterrée et le rayon ($r_3$) extérieur de l'anneau étant comprise entre $100,10^{-3}$ et $220.10^{-3}$ $\mu m^2$,

5. La fibre optique de l'une des revendications 1 à 4, présentant la valeur du double de l'intégrale du produit du rayon par, successivement, les différences ($\Delta n(r)$) entre l'Indice de la partie centrale de la fibre optique présentant un Indice supérieur à l'indice de la gaine, de la tranchée enterrés et de l'anneau et l'indice de la gaine entre un rayon nul et la rayon ($r_3$) extérieur de l'anneau étant comprise entre $30.10^{-3}$ et $110.10^{-3}$ $\mu m^2$.

6. La fibre de l'une des revendications 1à 5, présentant sur une bande de 1625 à 1675 nm, les pertes par courbure par enroulement de la fibre autour un manchon de 10 mm de rayon étant inférieures ou égales à 20 dB/m.

7. La fibre de l'une des revendications: 1 à 5, présentant sur une bande de 1626 à 1675 nm, les pertes de courbure par enroulement de 100 tours de la fibre optique autour d'un manchon de 30 mm de rayon étant inférieures ou égales à $10^{-4}$ dB.

8. La fibre de l'une des revendications 1 à 7, présentant un rapport entre la dispersion chromatique et l'atténuation inférieur ou égal à ·100 ps/(nm.dB) pour une longueur d'onde entre 1626 et 1675 nm.

9. La fibre de la revendication a, présentent un rapport entre la dispersion chromatique et l'atténuation inférieur ou égal à -150 ps/(nm.dB) pour une longueur d'onde entre 1625 et 1675 nm.

10. La fibre de l'une des revendications 1 à 9, présentant une dispersion chromatique inférieure ou égale à -50 ps/(nm.km) pour une longueur d'onde de 1650 nm.

11. La fibre de l'une des revendications 1 à 10, présentant pour une longueur d'onde de 1650 nm une sensibilité aux micro-courbure inférieure ou égale à 1.

12. La fibre de la revendication 11, présentant pour une longueur d'onde de 1650 nm une sensibilité aux micro-courbure Inférieure ou égale à 0,5.

13. La fibre de l'une des revendications 1 à 12, présentant, pour une longueur d'onde de 1650 nm, une dispersion modale de polarisation Inférieure ou égale à 0,2 ps/km$^{1/2}$.

14. La fibre de la revendications 13, présentant, pour une longueur d'onde de 1650 nm, une dispersion modale de polarisation Inférieure ou égale à 0,1 ps/km$^{1/2}$.

15. La fibre de la revendications 14, présentant pour une longueur d'onde de 1650 nm, une dispersion modale de polarisation Inférieure ou égale à 0,05 ps/km$^{1/2}$.

16. La fibre de l'une des revendications 1 à 15, présentant, pour une longueur d'onde de 1650 nm, une atténuation inférieure ou égale à 1 dB/km.

17. La fibre de l'une des revendications 1 à 12, présentant, pour une longueur d'onde de 1650 nm, une atténuation inférieure ou égale à 0,8 dB/km.

**18.** Un système de transmission, présentant:

- une émetteur de signaux optiques dans la bande de 1625 à 1675 nm,
- une section de fibre optique de ligne ($6_1$);
- une section ($12_1$) d'une fibre optique selon l'une des revendications 1 à 17, compensant la dispersion dans la fibre optique de ligne ($6_1$).

**19.** Le système de la revendication 18, présentant la fibre de ligne comprenant de la fibre à saut d'indice.

**20.** Le système de la revendication 19, présentant la fibre de compensation de dispersion présentant une surface effective à 1650 nm supérieure ou égale à 17 $\mu m^2$.

**21.** Le système de la revendication 20, présentant la fibre de compensation de dispersion présentant une surface effective à 1650 nm supérieure ou égale à 20 $\mu m^2$.

**22.** Le système de la revendication 21, présentant la fibre de compensation de dispersion présentant une surface effective à 1650 nm supérieure ou égale à 22 $\mu m^2$.

**23.** Le système de la revendication 18 ou 19, présentant la fibre de compensation de dispersion chromatique présentant , pour une valeur de longueur d'onde de 1650 nm, un rapport de la dispersion chromatique à la pente de dispersion chromatique étant compris entre 380 et 500 nm.

**24.** Le système de la revendication 18 ou 19, présentant la fibre de compensation de dispersion chromatique présentant, pour une valeur de longueur d'onde de 1650 nm, un rapport de la dispersion chromatique à la pente de dispersion chromatique étant compris entre 400 et 480 nm.

**25.** Le système de la revendication 18, présentant la fibre de ligne comprenant de la fibre à dispersion chromatique décalée positive.

**26.** Le système de la revendication 25, présentant la fibre de compensation de dispersion chromatique présentant une surface effective à 1650 nm supérieure ou égale à 18 $\mu m^2$.

**27.** Le système de la revendication 26, présentant la fibre de compensation de dispersion chromatique présentant une surface effective à 1650 nm supérieure ou égale à 20 $\mu m^2$.

**28.** Le système de l'une des revendications 25 à 27, présentant la fibre de compensation de la dispersion chromatique présentant, pour une valeur de longueur d'onde de 1650 nm, un rapport de dispersion chromatique à la pente de la dispersion chromatique étant compris entre180 et 300 nm.

**29.** Le système de l'une des revendications 25 à 27, présentant la fibre de compensation de la dispersion chromatique présentant, pour une valeur de longueur d'onde de 1650 nm, un rapport de dispersion chromatique à la pente de la dispersion chromatique étant compris entre 200 et 280 nm.

**30.** Le système de l'une des revendications 20 à 23, présentant la dispersion chromatique cumulée en bande U restant inférieure en valeur absolue à 50 ps/nm.

**31.** Le système de la revendication 30, présentant la dispersion chromatique cumulée en bande U restant Inférieure en valeur absolue à 25 ps/nm.

**Claims**

**1.** An optical fibre comprising, successively from the centre of the fibre towards the periphery, an index profile in the shape of a trapezium or rectangle with a depressed trench and a ring and then a cladding of constant index, the difference ($\Delta n_1$) between the maximum index of the trapezium or rectangle and the index of the cladding being between 16 x $10^{-3}$ and 30 x $10^{-3}$ inclusive and the outer radius ($r_1$) of the central portion of the optical fibre with an index greater than the index of the cladding being between 1.3 and 2.1 $\mu m$ inclusive, the difference ($\Delta n_2$) between the index of the depressed trench and the index of the cladding being between -9 x $10^{-3}$ and -4.5 x $10^{-3}$ inclusive

and the outer radius ($r_2$) of the depressed trench being between 3.4 and 6.2 $\mu$m inclusive, the difference ($\Delta n_3$) between the index of the ring and the index of the cladding being between 1 x 10$^{-3}$ and 14 x 10$^{-3}$ inclusive and the outer radius ($r_3$) of the ring being between 5.9 and 8.6 $\mu$m inclusive, **characterised in that** the value of the integral of the difference ($\Delta n(r)$) between the index of the central portion of the fibre with an index greater than the index of the cladding and the index of the cladding, between a zero radius and the outer radius ($r_1$) of the central portion of the optical fibre with an index greater than the index of the cladding, is between 34 x 10$^{-3}$ and 38 x 10$^{-3}$ $\mu$m inclusive; and **in that** the radii ($r_1$; $r_2$; $r_3$) and the differences ($\Delta n_1$; $\Delta n_2$; $\Delta n_3$) between the indices of the central portion of the fibre with an index greater than the index of the cladding, of the depressed trench and of the ring and the index of the cladding are determined in such a way that the optical fibre has a theoretical cut-off wavelength less than or equal to 1900 nm and, for a wavelength of 1650 nm, a chromatic dispersion less than or equal to -20 ps/(nm.km), a negative chromatic dispersion slope, a ratio of chromatic dispersion to chromatic dispersion slope between 100 nm and 600 nm, an effective area greater than or equal to 15 $\mu$m$^2$ and, over a band from 1625 to 1675 nm, bending losses due to winding the optical fibre around a sleeve of 10 mm radius which are less than or equal to 100 dB/m, and bending losses due to winding 100 turns of the optical fibre around a sleeve of 30 mm radius which are less than or equal to 5 x 10$^{-3}$ dB.

2. The fibre of claim 1, wherein the value of twice the integral of the product of the radius and the difference ($\Delta n(r)$) between the index of the central portion of the optical fibre with an index greater than the index of the cladding and the index of the cladding, between a zero radius and the outer radius ($r_1$) of the central portion of the optical fibre with an index greater than the index of the cladding, is between 51 x 10$^{-3}$ and 80 x 10$^{-3}$ $\mu$m$^2$ inclusive.

3. The optical fibre of claim 1 or 2, wherein the value of twice the integral of the product of the radius and the difference ($\Delta n(r)$) between the index of the depressed trench and the index of the cladding, between the outer radius ($r_1$) of the central portion of the optical fibre with an index greater than the index of the cladding and the outer radius ($r_2$) of the depressed trench, is between -200 x 10$^{-3}$ and -90 x 10$^{-3}$ $\mu$m$^2$ inclusive.

4. The optical fibre of one of claims 1 to 3, wherein the value of twice the integral of the product of the radius and the difference ($\Delta n(r)$) between the index of the ring and the index of the cladding, between the outer radius ($r_2$) of the depressed trench and the outer radius ($r_3$) of the ring, is between 100 x 10$^{-3}$ and 220 x 10$^{-3}$ $\mu$m$^2$ inclusive.

5. The optical fibre of one of claims 1 to 4, wherein the value of twice the integral of the product of the radius and, successively, the differences ($\Delta n(r)$) between the index of the central portion of the optical fibre with an index greater than the index of the cladding, of the depressed trench and of the ring and the index of the cladding, between a zero radius and the outer radius ($r_3$) of the ring, is between 30 x 10$^{-3}$ and 110 x 10$^{-3}$ $\mu$m$^2$ inclusive.

6. The fibre of one of claims 1 to 5, wherein, over a band from 1625 to 1675 nm, the bending losses due to winding the fibre around a sleeve of 10 mm radius are less than or equal to 20 dB/m.

7. The fibre of one of claims 1 to 5, wherein, over a band from 1625 to 1675 nm, the bending losses due to winding 100 turns of the optical fibre around a sleeve of 30 mm radius are less than or equal to 10$^{-4}$ dB.

8. The fibre of one of claims 1 to 7, having a ratio between the chromatic dispersion and attenuation of less than or equal to -100 ps/(nm.dB) for a wavelength between 1625 and 1675 nm.

9. The fibre of claim 8, having a ratio between the chromatic dispersion and attenuation of less than or equal to -150 ps/(nm.dB) for a wavelength between 1625 and 1675 nm.

10. The fibre of one of claims 1 to 9, having a chromatic dispersion less than or equal to -50 ps/(nm.km) for a wavelength of 1650 nm.

11. The fibre of one of claims 1 to 10, having, for a wavelength of 1650 nm, a sensitivity to microbending less than or equal to 1.

12. The fibre of claim 11, having, for a wavelength of 1650 nm, a sensitivity to microbending less than or equal to 0.5.

13. The fibre of one of claims 1 to 12, having, for a wavelength of 1650 nm, a polarisation mode dispersion less than or equal to 0.2 ps/km$^{1/2}$.

**14.** The fibre of claim 13, having, for a wavelength of 1650 nm, a polarisation mode dispersion less than or equal to 0.1 ps/km$^{1/2}$.

**15.** The fibre of claim 14, having, for a wavelength of 1650 nm, a polarisation mode dispersion less than or equal to 0.05 ps/km$^{1/2}$.

**16.** The fibre of one of claims 1 to 15, having, for a wavelength of 1650 nm, an attenuation less than or equal to 1 dB/km.

**17.** The fibre of one of claims 1 to 12, having, for a wavelength of 1650 nm, an attenuation less than or equal to 0.8 dB/km.

**18.** A transmission system having:

- an emitter of optical signals in the band from 1625 to 1675 nm,
- a section of line optical fibre ($6_1$),
- a section ($12_1$) of an optical fibre according to one of claims 1 to 17 which compensates the dispersion in the line optical fibre ($6_1$).

**19.** The system of claim 18, wherein the line fibre comprises step-index fibre.

**20.** The system of claim 19, wherein the dispersion-compensating fibre has an effective area at 1650 nm which is greater than or equal to 17 $\mu m^2$.

**21.** The system of claim 20, wherein the dispersion-compensating fibre has an effective area at 1650 nm which is greater than or equal to 20 $\mu m^2$.

**22.** The system of claim 21, wherein the dispersion-compensating fibre has an effective area at 1650 nm which is greater than or equal to 22 $\mu m^2$.

**23.** The system of claim 18 or 19, wherein the chromatic dispersion-compensating fibre has, for a wavelength value of 1650 nm, a ratio of chromatic dispersion to chromatic dispersion slope of between 380 and 500 nm inclusive.

**24.** The system of claim 18 or 19, wherein the chromatic dispersion-compensating fibre has, for a wavelength value of 1650 nm, a ratio of chromatic dispersion to chromatic dispersion slope of between 400 and 480 nm inclusive.

**25.** The system of claim 18, wherein the line fibre comprises positive chromatic dispersion shifted fibre.

**26.** The system of claim 25, wherein the chromatic dispersion-compensating fibre has an effective area at 1650 nm which is greater than or equal to 18 $\mu m^2$.

**27.** The system of claim 26, wherein the chromatic dispersion-compensating fibre has an effective area at 1650 nm which is greater than or equal to 20 $\mu m^2$.

**28.** The system of one of claims 25 to 27, wherein the chromatic dispersion-compensating fibre has, for a wavelength value of 1650 nm, a ratio of chromatic dispersion to chromatic dispersion slope of between 180 and 300 nm inclusive.

**29.** The system of one of claims 25 to 27, wherein the chromatic dispersion-compensating fibre has, for a wavelength value of 1650 nm, a ratio of chromatic dispersion to chromatic dispersion slope of between 200 and 280 nm inclusive.

**30.** The system of one of claims 20 to 23, wherein the cumulative chromatic dispersion in the U band remains less than 50 ps/nm in terms of absolute value.

**31.** The system of claim 30, wherein the cumulative chromatic dispersion in the U band remains less than 25 ps/nm in terms of absolute value.

**Patentansprüche**

**1.** Optische Faser umfassend aufeinanderfolgend vom Mittelpunkt der Faser zum Rand hin ein trapez- oder rechteckförmiges Indexprofil mit einem vergrabenen Abschnitt und einem Ring gefolgt von einer Hülle mit konstantem Index, wobei die Differenz ($\Delta n_1$) zwischen dem maximalen Index des Trapezes oder des Rechtecks und dem Index der Hülle zwischen $16 \cdot 10^{-3}$ und $30 \cdot 10^{-3}$ enthalten ist und der Außenradius ($r_1$) des zentralen Abschnitts der optischen Faser, welcher einen Index größer als der Index der Hülle aufweist, zwischen 1,3 und 2,1 $\mu$m enthalten ist, wobei die Differenz ($\Delta n_2$) zwischen dem Index des vergrabenen Abschnitts und dem Index der Hülle zwischen - $9 \cdot 10^{-3}$ und $-4,5 \cdot 10^{-3}$ enthalten ist und der Außenradius ($r_2$) des vergrabenen Abschnitts zwischen 3,4 und 6,2 $\mu$m enthalten ist, wobei die Differenz ($\Delta n_3$) zwischen dem Index des Rings und dem Index der Hülle zwischen $1 \cdot 10^{-3}$ und $14 \cdot 10^{-3}$ enthalten ist und der Außenradius ($r_3$) des Rings zwischen 5,9 und 8,6 $\mu$m enthalten ist, **dadurch gekennzeichnet, dass** der Wert des Integrals der Differenz ($\Delta n(r)$) des Index des zentralen Abschnitts der Faser, welcher einen Index größer als der Index der Hülle aufweist, zu dem Index der Hülle von einem Radius Null zu dem Außenradius ($r_1$) des zentralen Abschnitts der optischen Faser, welcher einen Index größer als der Index der Hülle aufweist, zwischen $34 \cdot 10^{-3}$ und $38 \cdot 10^{-3}$ $\mu$m enthalten ist, und dass die Radien ($r_1$; $r_2$; $r_3$) und die Differenzen ($\Delta n_1$; $\Delta n_2$; $\Delta n_3$) der Indizes des zentralen Abschnitts der Faser, welcher einen Index größer als der Index der Hülle aufweist, des vergrabenen Abschnitts und des Rings zu dem Index der Hülle in einer Weise bestimmt sind, dass die optische Faser eine theoretische Abschneidewellenlänge kleiner oder gleich 1900 nm und für eine Wellenlänge von 1650 nm eine chromatische Dispersion kleiner oder gleich -20 ps/(nm·km), eine negative Steigung der chromatischen Dispersion, ein Verhältnis der chromatischen Dispersion zur Steigung der chromatischen Dispersion zwischen 100 nm und 600 nm, eine effektive Oberfläche größer oder gleich 15 $\mu$m$^2$ und in einem Bereich von 1625 bis 1675 nm Verluste durch Krümmung durch Aufrollen der optischen Faser um einen Stutzen mit Radius 10 mm kleiner oder gleich 100 dB/m und Verluste durch Krümmung durch Aufrollen von 100 Windungen der Faser um einen Stutzen mit 30 mm Radius kleiner oder gleich $5 \cdot 10^{-3}$ dB aufweist.

2. Faser nach Anspruch 1, welche einen doppelten Wert des Integrals des Produktes des Radius mit der Differenz ($\Delta n(r)$) des Index des zentralen Abschnitts der optischen Faser, welche einen Index größer als der Index der Hülle aufweist, zu dem Index der Hülle von einem Radius Null zu dem Außenradius ($r_1$) des zentralen Abschnitts der optischen Faser, welcher einen Index größer als der Index der Hülle aufweist, aufweist, welcher zwischen $51 \cdot 10^{-3}$ und $80 \cdot 10^{-3}$ $\mu$m$^2$ enthalten ist.

3. Optische Faser nach Anspruch 1 oder 2, welche einen doppelten Wert des Integrals des Produkts des Radius mit der Differenz ($\Delta n(r)$) des Index des vergrabenen Abschnitts zu dem Index der Hülle von dem Außenradius ($r_1$) des zentralen Abschnitts der optischen Faser, welcher einen Index größer als der Index der Hülle aufweist, zu dem Außenradius ($r_2$) des vergrabenen Abschnitts aufweist, welcher zwischen $-200 \cdot 10^{-3}$ und $-90 \cdot 10^{-3}$ $\mu$m$^2$ enthalten ist.

4. Optische Faser nach einem der Ansprüche 1-3, welche einen doppelten Wert des Integrals des Produkts des Radius mit der Differenz ($\Delta n(r)$) des Index des Rings zu dem Index der Hülle von dem Außenradius ($r_2$) des vergrabenen Abschnitts zu dem Außenradius ($r_3$) des Rings aufweist, welcher zwischen $100 \cdot 10^{-3}$ und $220 \cdot 10^{-3}$ $\mu$m$^2$ enthalten ist.

5. Optische Faser nach einem der Ansprüche 1-4, welche einen doppelten Wert des Integrals des Produkts des Radius mit aufeinanderfolgend den Differenzen ($\Delta n(r)$) des Index des zentralen Abschnitts der optischen Faser, welcher einen Index größer als der Index der Hülle aufweist, des vergrabenen Abschnitts und des Rings zu dem Index der Hülle, von einem Radius Null zu dem Außenradius ($r_3$) des Rings aufweist, welcher zwischen $30 \cdot 10^{-3}$ und $110 \cdot 1^{-3}$ $\mu$m$^2$ enthalten ist.

6. Faser nach einem der Ansprüche 1-5, welche in einem Bereich von 1625 bis 1675 nm Verluste durch Krümmung durch Aufrollen der Faser um einen Stutzen mit 10 mm Radius aufweist, welche kleiner oder gleich 20 dB/m sind.

7. Faser nach einem der Ansprüche 1-5, welche in einem Bereich von 1625 bis 1675 nm Verluste durch Krümmungen durch Aufrollen von 100 Windungen der optischen Faser um einen Stutzen mit 30 mm Radius aufweist, welche kleiner oder gleich $10^{-4}$ dB sind.

8. Faser nach einem der Ansprüche 1-7, welche ein Verhältnis der chromatischen Dispersion zu der Dämpfung kleiner oder gleich -100 ps/(nm·dB) für eine Wellenlänge zwischen 1625 und 1675 nm aufweist.

9. Faser nach Anspruch 8, welche ein Verhältnis der chromatischen Dispersion zu der Dämpfung kleiner oder gleich -150 ps/(nm·dB) für eine Wellenlänge zwischen 1625 und 1675 nm aufweist.

10. Faser nach einem der Ansprüche 1-9, welche für eine Wellenlänge von 1650 nm eine chromatische Dispersion kleiner oder gleich -50 ps/(nm·km) aufweist.

**11.** Faser nach einem der Ansprüche 1-10, welche für eine Wellenlänge von 1650 nm eine Empfindlichkeit gegenüber Mikrokrümmungen kleiner oder gleich 1 aufweist.

**12.** Faser nach Anspruch 11, welche für eine Wellenlänge von 1650 nm eine Empfindlichkeit gegenüber Mikrokrümmungen kleiner oder gleich 0,5 aufweist.

**13.** Faser nach einem der Ansprüche 1-12, welche für eine Wellenlänge von 1650 nm eine modale Polarisationsdispersion kleiner oder gleich 0,2 ps/km$^{1/2}$ aufweist.

**14.** Faser nach Anspruch 13, welche für eine Wellenlänge von 1650 nm eine modale Polarisationsdispersion kleiner oder gleich 0,1 ps/km$^{1/2}$ aufweist.

**15.** Faser nach Anspruch 14, welche für eine Wellenlänge von 1650 nm eine modale Polarisationsdispersion kleiner oder gleich 0,05 ps/km$^{1/2}$ aufweist.

**16.** Faser nach einem der Ansprüche 1-15, welche für eine Wellenlänge von 1650 nm eine Dämpfung kleiner oder gleich 1 dB/km aufweist.

**17.** Faser nach einem der Ansprüche 1-12, welche für eine Wellenlänge von 1650 nm eine Dämpfung kleiner oder gleich 0,8 dB/km aufweist.

**18.** Übertragungssystem, aufweisend:

- einen Sender für optische Signale im Bereich von 1625 bis 1675 nm,
- einen Abschnitt einer optischen Leitungsfaser ($6_1$),
- einen Abschnitt ($12_1$) einer optischen Faser gemäß einem der Ansprüche 1-17, welche die Dispersion in der optischen Leitungsfaser ($6_1$) kompensiert.

**19.** System nach Anspruch 18, welches die Leitungsfaser aufweist, welche eine Faser mit Indexsprung umfasst.

**20.** System nach Anspruch 19, welches die Dispersionskompensationsfaser aufweist, welche bei 1650 nm eine effektive Oberfläche größer oder gleich 17 $\mu$m$^2$ aufweist.

**21.** System nach Anspruch 20, welches die Dispersionskompensationsfaser aufweist, welche bei 1650 nm eine effektive Oberfläche größer oder gleich 20 $\mu$m$^2$ aufweist.

**22.** System nach Anspruch 21, welches die Dispersionskompensationsfaser aufweist, welche bei 1650 nm eine effektive Oberfläche größer oder gleich 22 $\mu$m$^2$ aufweist.

**23.** System nach Anspruch 18 oder 19, welche die Faser zur Kompensation der chromatischen Dispersion aufweist, welche für einen Wert der Wellenlänge von 1650 nm ein Verhältnis der chromatischen Dispersion zu der Steigung der chromatischen Dispersion aufweist, welches zwischen 380 und 500 nm enthalten ist.

**24.** System nach Anspruch 18 oder 19, welches die Faser zur Kompensation der chromatischen Dispersion aufweist, welche für einen Wert der Wellenlänge von 1650 nm ein Verhältnis der chromatischen Dispersion zu der Steigerung der chromatischen Dispersion aufweist, welches zwischen 400 und 480 nm enthalten ist.

**25.** System nach Anspruch 18, welches die Leitungsfaser aufweist, welche eine Faser mit positiv versetzter chromatischer Dispersion aufweist.

**26.** System nach Anspruch 25, welches die Faser zur Kompensation der chromatischen Dispersion aufweist, welche bei 1650 nm eine effektive Oberfläche größer oder gleich 18 $\mu$m$^2$ aufweist.

**27.** System nach Anspruch 26, welches die Faser zur Kompensation der chromatischen Dispersion aufweist, welche bei 1650 nm eine effektive Oberfläche größer oder gleich 20 $\mu$m$^2$ aufweist.

**28.** System nach einem der Ansprüche 25-27, welches die Faser zur Kompensation der chromatischen Dispersion aufweist, welche für einen Wert der Wellenlänge von 1650 nm ein Verhältnis der chromatischen Dispersion zu der Steigung der chromatischen Dispersion aufweist, welches zwischen 180 und 300 nm enthalten ist.

29. System nach einem der Ansprüche 25-17, welches die Faser zur Kompensation der chromatischen Dispersion aufweist, welche für einen Wert der Wellenlänge von 1650 nm ein Verhältnis der chromatischen Dispersion zu der Steigung der chromatischen Dispersion aufweist, welches zwischen 200 und 280 nm enthalten ist.

30. System nach einem der Ansprüche 20-23, welches im U-Band die kumulierte chromatische Dispersion aufweist, welche als Absolutwert kleiner als 50 ps/nm bleibt.

31. System nach Anspruch 30, welches im U-Band die kumulierte chromatische Dispersion aufweist, welche als Absolutwert kleiner als 25 ps/nm bleibt.

Figure 1

r (μm)

Fig. 2

r (μm)

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5568583 A
- US 5361319 A
- FR 9908298 A
- FR 0106246 A
- US 6263138 B
- EP 1081514 A
- US 5361819 A